# EUROPÄISCHE PATENTANMELDUNG

(11) **EP 0 963 098 A2**
(43) Veröffentlichungstag der Anmeldung: **08.12.1999**
(21) Anmeldenummer: 99440094.3
(22) Anmeldetag: 30.04.1999
(51) Int. Cl.: H04M 19/08, H04Q 11/04

(54) **Polaritätsumschalter und Netzabschluss eines Telekommunikationsnetzes**

(30) Priorität: 05.05.1998 DE 19819912
(71) Anmelder: ALCATEL, 75008 Paris (FR)
(72) Erfinder: Glaser, Wolfgang, 70563 Stuttgart (DE); Brodbeck, Lothar, 71034 Böblingen (DE)
(74) Vertreter: Menzietti, Domenico, Dipl.-Ing

(57) **Zusammenfassung**

Aufgabe der Erfindung ist es einen Polaritätsumschalter und einen Netzabschluß zu schaffen, die es ermöglichen mit weniger Nachteilen als aus dem Stand der Technik bekannt auf die Notstromversorgung umzuschalten. Der erfindungsgemäße Polaritätsumschalter (UM) ist insbesondere dadurch gekennzeichnet, daß er zwei optisch ansteuerbare Transistoren (OT1, OT2) zur Invertierung der Polarität der Spannung beinhaltet. Ein optisch ansteuerbarer Transistor hat keine elektrische Verbindung zwischen dem Steuereingang und dem stromführenden Pfad. Durch diese Isolation treten die Nachteile üblicher Bipolartransistoren nicht auf. Die Umschaltung von der Normalstromversorgung auf die Notstromversorgung erfolgt somit quasi ohne Verluste und ohne parasitäre Effekte. Auch können Störsignale, die auf das Steuersignal unerwünscht aufmoduliert wurden, nicht in den Signalpfad gelangen. Kurzschlüsse bei der Umschaltung werden durch eine Finite State Machine (FSM) mit mindestens drei Zuständen verhindert.

## Beschreibung

Die Erfindung bezieht sich auf einen Polaritätsumschalter gemäß dem Oberbegriff des Patentanspruchs 1 und einen Netzabschluß eines Telekommunikationsnetzes.

Telekommunikationsnetze beinhalten in der Regel eine Vielzahl von Netzabschlüssen, die über eine Vielzahl von Leitungen miteinander verbunden sind. An jeden Netzabschluß sind Endgeräte eines Teilnehmers, z.B. ein Telefon, ein Telefaxgerät und/oder ein PC, anschließbar. Die Teilnehmer können über das Telekommunikationsnetz miteinander kommunizieren. Gesteuert wird die Kommunikation z.B. über eine Vermittlungsstelle. Ein solches Telekommunikationsnetz ist z.B. das sog. ISDN; ISDN = Integrated Services Digital Network oder das sog. POTS; POTS = Plain Old Telephone System. Um jedem Teilnehmer auch bei Ausfall der eigenen Stromversorgung ein Mindestmaß an Kommunikation zu ermöglichen, ist es vorgesehen zumindest ein Telefon pro Teilnehmer über das Telekommunikationsnetz fernzuspeisen (Notstromversorgung). Die ferngespeiste Notstromversorgung erfolgt mittels einer Gleichspannung von -40 Volt. Die Normalstromversorgung wird im Netzabschluß aus einer Stromversorgungsleitung generiert, die dem Teilnehmer unabhängig vom Telekommunikationsnetz zugeführt wird, z.B. die 220 Volt Versorgungsleitung für den Haushalt. Die Normalstromversorgung erfolgt mittels einer Gleichspannung von +40 Volt. Für den Fall, daß die Normalstromversorgung gestört ist, ist es vorgesehen das Telefon des Teilnehmers über die Notstromversorgung fernzuspeisen.

Im Netzabschluß ist daher eine Auswahleinrichtung enthalten, die eine Störung der Normalstromversorgung detektiert und auf die Notstromversorgung umschaltet. Die zusätzliche Umschaltung auf die invertierte Polarität wurde bisher mittels eines Polaritätsumschalters, der ein Relais beinhaltet, durchgeführt. Ein Relais ist ein mechanisches Bauelement, das die bekannten mechanischen Nachteile aufweist, z.B. Verschleiß, "Verkleben", hohe Reaktionszeit, Funkenbildung beim Umschalten.

Aus DE 689 10997 T2 (= EP 0 330 274 B1) ist ein Netzabschluß mit einer Auswahleinrichtung zur Umschaltung zwischen Normalstromversorgung und Notstromversorgung bekannt, die anstelle eines Relais eine komplexe Schaltung aus Bipolartransistoren, Dioden und Widerständen verwendet. Es werden fünf Bipolartransistoren, zwei Dioden und dreizehn Widerstände benötigt. Die komplexe Schaltung hat zwar keine mechanischen Nachteile und benötigt keinen separaten Polaritätsumschalter, doch können Leckströme und sog. "Latching" auftreten.

Aufgabe der Erfindung ist es daher einen Polaritätsumschalter und einen Netzabschluß zu schaffen, die es ermöglichen mit weniger Nachteilen als aus dem Stand der Technik bekannt auf die Notstromversorgung umzuschalten.

Gelöst wird diese Aufgabe durch einen Polaritätsumschalter gemäß Patentanspruch 1 und einen Netzabschluß gemäß Patentanspruch 4. Der erfindungsgemäße Polaritätsumschalter ist insbesondere dadurch gekennzeichnet, daß er zwei optisch ansteuerbare Transistoren zur Invertierung der Polarität der Spannung beinhaltet zur. Ein optisch ansteuerbarer Transistor hat keine elektrische Verbindung zwischen dem Steuereingang und dem stromführenden Pfad. Durch diese Isolation treten die oben angeführten Nachteile üblicher Bipolartransistoren nicht auf. Die Umschaltung von der Normalstromversorgung auf die Notstromversorgung erfolgt somit quasi ohne Verluste und ohne parasitäre Effekte. Auch können Störsignale, die auf das Steuersignal unerwünscht aufmoduliert wurden, nicht in den Signalpfad gelangen.

Bei einer bevorzugten Ausführungsform der Erfindung wird für die Umschaltung eine Finite State Machine mit mindestens drei Zuständen verwendet. Zwischen der Umschaltung von der Stromversorgung mit der ursprünglichen Polarität auf die Stromversorgung mit der invertierten Polarität ist ein Zwischenschritt vorgesehen, indem weder die eine noch die andere Stromversorgung anliegt. Die Einführung dieses Zwischenschritts, sog. Totzeit, hat den Vorteil, daß die bei der Umschaltung möglichen Strom-/Spannungsspitzen und/oder Kurzschlüsse, die zur Zerstörung der Transistoren führen könnten, unterdrückt werden.

Vorteilhafte Ausgestaltungen der Erfindung sind den abhängigen Ansprüchen zu entnehmen.

Ein Ausführungsbeispiel der Erfindung wird im folgenden unter Zuhilfenahme der Figuren 1 bis 5 erläutert. Es zeigen:
- Fig. 1: eine schematische Darstellung eines Telekommunikationsnetzes,
- Fig. 2: eine schematische Darstellung eines erfindungsgemäßen Netzabschlußes,
- Fig. 3: eine schematische Darstellung eines erfindungsgemäßen Polaritätsumschalters,
- Fig. 4: ein Blockschaltbild einer Finite State Machine und
- Fig. 5: zwei Diagramme für die Umschaltung.

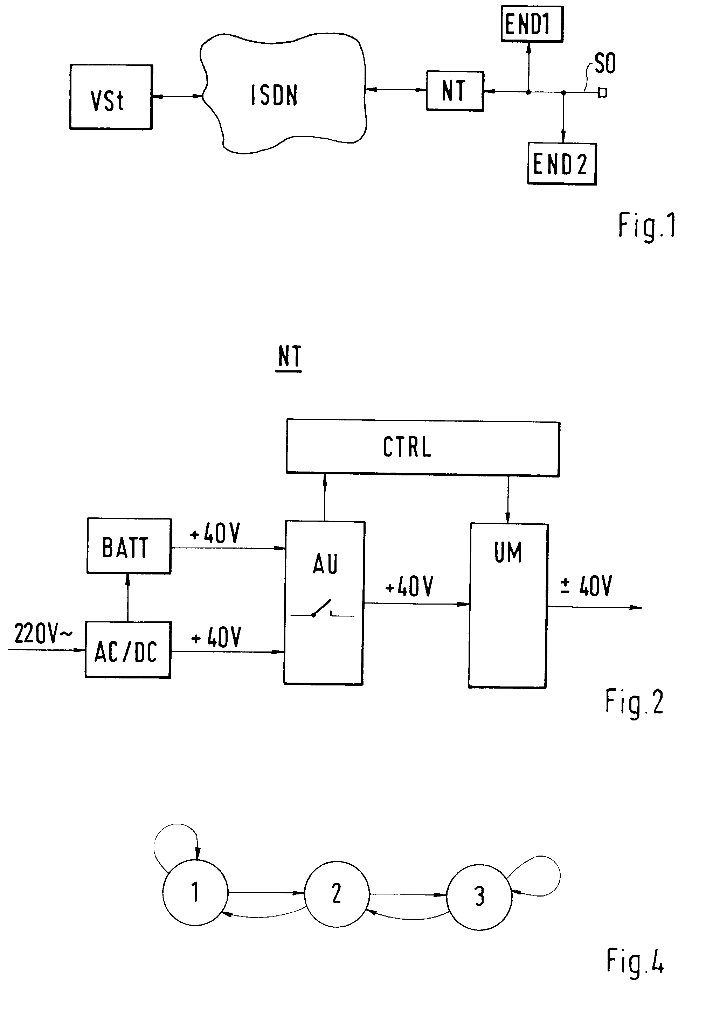

Das Ausführungsbeispiel wird nun zunächst unter Zuhilfenahme von Fig. 1 erläutert. Fig. 1 zeigt ein Telekommunikationsnetz ISDN. Das Telekommunikationsnetz ist als diensteintegrierendes digitales Netz, dem sog. ISDN aufgebaut. Beispielhaft sind eine Vermittlungsstelle VSt und ein Netzabschluß NT eines Teilnehmers sowie zwei über einen S0-Bus mit dem Netzabschluß NT verbundene Endgeräte END1, END2 gezeigt. Die Endgeräte END1, END2, z.B. Telefon, Telefax, PC, kommunizieren über das ISDN mit Endgeräten anderer Teilnehmer. Die Vermittlungsstelle VSt vermittelt die benötigten Durchschaltungen, sorgt für den Verbindungsauf- und abbau sowie die Vergebührung. Alle Netzabschlüsse NT werden zur Ermöglichung einer Notspeisung über das ISDN ferngespeist. Die ferngespeiste Stromversorgung liefert jedem Netzabschluß NT eine Gleichspannung von +40 Volt. Mit den +40 Volt kann ein Endgerät END1, z.B. ein analoges Telefon, das über einen Adapter an den S0-Bus angeschlossen ist oder ein ISDN Terminal mit Strom versorgt werden. Auf diese Weise kann der Teilnehmer auch bei Ausfall der eigenen Stromversorgung zumindest telefonieren. Anstelle der Fernspeisung zur Generierung der Notstromversorgung kann auch eine Batterie im Netzabschluß vorgesehen sein. Die Normalstromversorgung hat eine Gleichspannung von +40 Volt und wird aus einer separaten Stromleitung generiert, die nicht mit dem ISDN verbunden ist, z.B. die 220 Volt Leitung für die Haushaltsgeräte.

Der Netzabschluß NT verfügt über eine Auswahleinrichtung und einen Polaritätsumschalter, mittels derer er für den Fall, daß die Normalstromversorgung mit Störungen behaftet ist, z.B. eine zu geringe Spannung liefert, auf die Notstromversorgung umschalten kann. Das zu versorgende Endgerät END1 kann sowohl mit +40 Volt als auch mit -40 Volt arbeiten, so daß auch für den Fall, daß eine ferngespeiste Stromversorgung erfolgt, die Durchführung von Telefonaten möglich ist.

Anstelle des ISDN kann auch ein Verteilnetz mit Rückkanal als Telekommunikationsnetz vorgesehen sein. Dann erfolgt die Anbindung der Netzabschlüsse über Koaxialkabel. Durch die Verwendung von Koaxialkabeln ist eine Fernspeisung nicht mehr möglich. Insbesondere für die Telefonie, die in solchen Netzen unter dem Namen "cablephone" bekannt ist, soll aber weiterhin eine Speisung mindestens eines Endgerätes vom Netzabschluß aus erfolgen. Die Stromversorgung erfolgt über eine vom Telekommunikationsnetz unabhängigen Stromversorgung. Die Notstromversorgung erfolgt über eine Batterie. Die Umschaltung auf die Notstromversorgung erfolgt über eine Auswahleinrichtung und einen Polaritätsumschalter.

Das Ausführungsbeispiel wird nun weiter unter Zuhilfenahme von Fig. 2 erläutert. Fig. 2 zeigt einen erfindungsgemäßen Netzabschluß NT aus Fig. 1 in einer detaillierterer Darstellung. Es sind lediglich die für die Umschaltung von der Normalstromversorgung auf die Notstromversorgung benötigten Baugruppen dargestellt. Auf eine Darstellung der restlichen, bekannten Baugruppen wurde aus Gründen der Übersichtlichkeit verzichtet.

Der Netzabschluß NT beinhaltet eine Auswahleinrichtung AU, einen Polaritätsumschalter UM, eine Steuereinrichtung CTRL, einen Umsetzer AC/DC und eine Batterie BATT.

Der Umsetzer AC/DC generiert aus einer 220 Volt Wechselspannung, die dem Netzabschluß NT unabhängig vom Telekommunikationsnetz über eine separate Stromversorgungsleitung zugeführt wird, ein +40 Volt Gleichspannung, die er der Auswahleinrichtung AU zuführt. Zusätzlich ist es vorgesehen, daß der Umsetzer AC/DC die Batterie BATT auflädt, solange ihm Strom zugeführt wird.

Die Batterie BATT ist als wiederaufladbare Batterie ausgeführt, die eine Gleichspannung von +40 Volt liefert. Diese +40 Volt Gleichspannung wird der Auswahleinrichtung AU zugeführt.

Die Auswahleinrichtung AU vergleicht die ihr zugeführte Gleichspannung der Batterie BATT mit der ihr zugeführten Gleichspannung des Umsetzers AC/DC. Die Auswahleinrichtung AU wählt vorzugsweise die Gleichspannung des Umsetzers AC/DC aus, um sie an den Polaritätsumschalter UM weiterzuleiten, da die Batterie BATT nur eine begrenzte Kapazität hat. Die Auswahleinrichtung AU meldet der Steuereinrichtung CTRL, welche Auswahl sie getroffen hat. Wenn z.B. die Gleichspannung des Umsetzers AC/DC, z.B. aufgrund von Schwankungen auf der Stromversorgungsleitung unter eine vorgegebene Schwelle absinkt, so wählt sie die Gleichspannung der Batterie BATT aus.

Die Steuereinrichtung CTRL steuert den Polaritätsumschalter UM derart an, daß dieser die Gleichspannung des Umsetzers AC/DC unverändert weiterleitet und die Gleichspannung der Batterie BATT einer Polaritätsinvertierung unterzieht und anschließend mit invertierter Polarität weiterleitet. Die Polaritätsinvertierung ist notwendig, um nur einem Endgerät, nämlich einem Telefon, das sowohl für den Betrieb mit einer Versorgungsspannung von +40 Volt als auch von -40 Volt ausgelegt ist, die Möglichkeit zu geben weiterhin zu kommunizieren, da die Kapazität der Batterie beschränkt ist und nicht durch andere Endgeräte unnötig Strom verbraucht werden soll. Die Versorgung über die Batterie BATT ist nur eine Notstromversorgung, die die Versorgung über die Stromversorgungsleitung nur für kurze Zeit ersetzen kann.

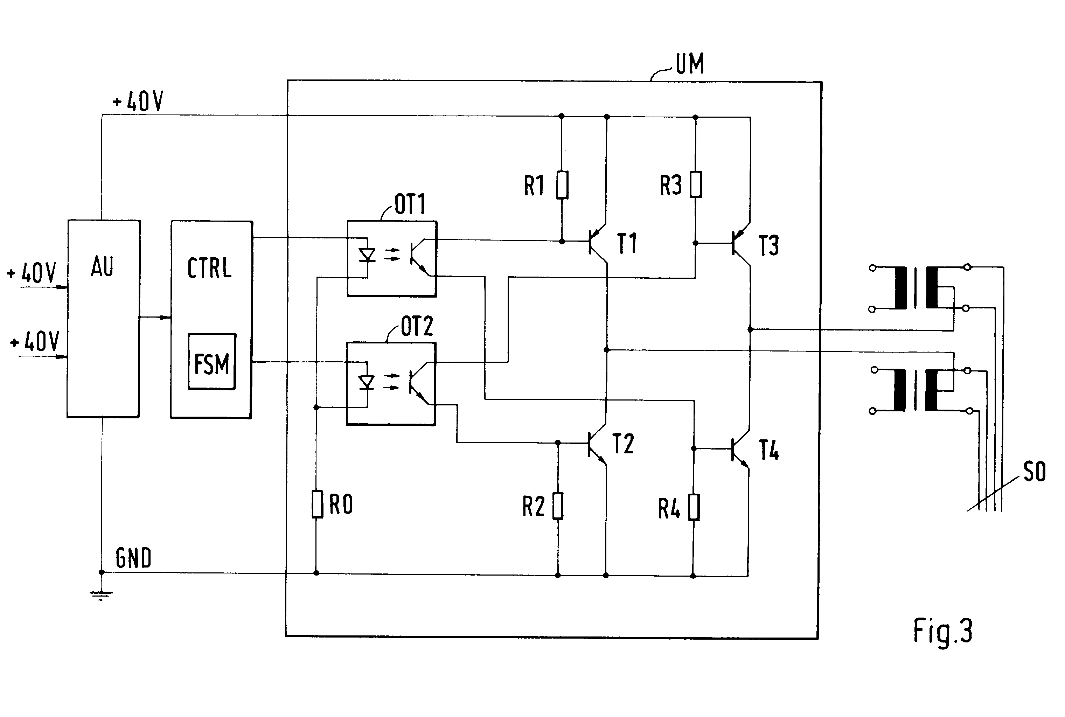

Das Ausführungsbeispiel wird nun weiter unter Zuhilfenahme von Fig. 3 erläutert. Fig. 3 zeigt einen erfindungsgemäßen Polaritätsumschalter UM.

Der Polaritätsumschalter UM dient zur wahlweisen Weiterleitung einer Spannung mit einer vorgegebenen Polarität oder zur Invertierung der Polarität der Spannung und zur Weiterleitung der Spannung mit invertierter Polarität. Der Polaritätsumschalter UM beinhaltet zwei optisch ansteuerbare Transistoren OT1, OT2 zur Invertierung der Polarität der Spannung. Beide optisch ansteuerbaren Transistor OT1, OT2 haben jeweils keine elektrische Verbindung zwischen dem Steuereingang und dem stromführenden Pfad. Durch diese Isolation ist eine potentialfreie Schaltung möglich.

Die zwei optisch ansteuerbare Transistoren OT1, OT2 sind als Optokoppler oder als Opto-MOS Transistoren ausgeführt.

Der Polaritätsumschalter UM beinhaltet zwei optisch ansteuerbare Transistoren OT1, OT2 und vier Transistor/Widerstandspaare T1, R1 ; T2, R2; T3, R3; T4, R4. Jedes Transistor/Widerstandspaar T1, R1 ; T2, R2; T3, R3; T4, R4 beinhaltet einen Transistor T1, T2, T3, T4 und einen mit dem Steuereingang und dem stromverstärkenden Ausgang des Transistors T1, T2, T3, T4 verbundenen Widerstand R1, R2, R3, R4. beinhaltet, Jeweils zwei Transistor/Widerstandspaare T1, R1, T2, R2; T3, R3, T4, R4 sind in Reihe geschaltet. Jeweils ein optisch ansteuerbarer Transisitor OT1 ; OT2 steuert zwei Transistor/Widerstandspaare T1, R1, T4, R4; T2, R2, T3, R3 an, die nicht miteinander in Reihe verschaltet sind.

Die Transistoren T1, T2 , T3, T4 sind beispielsweise als Bipolartransistoren ausgeführt. Die Transistoren T1 und T3 sind pnp Transistoren, die Transistoren T2 und T4 npn Transistoren. Die Emitter der Transistoren T1 und T3 sind mit der von der Auswahleinrichtung AU bereitgestellten Versorgungspannung verbunden, die Emitter der Transistoren T2 und T4 mit Masse.

Die Transistoren T1 und T3 werden vom optisch ansteuerbaren Transistor OT1 angesteuert. Sie werden derart angesteuert, daß beide leiten oder beide sperren.

Die Transistoren T2 und T4 werden vom optisch ansteuerbaren Transistor OT2 angesteuert. Sie werden derart angesteuert, daß beide leiten oder beide sperren.

Leiten T1 und T4, so sperren T2 und T3. Dadurch liegt eine Ausgangsspannung von -40 Volt am Ausgang des Polaritätsumschalters UM . Leiten T2 und T3, so sperren T1 und T4. Dadurch liegt eine Ausgangsspannung von +40 Volt am Ausgang des Polaritätsumschalters UM.

Die optisch ansteuerbaren Transistoren OT1, OT2 sind über einen Widerstand R0 mit Masse verbunden, um ein definiertes Potential zu schaffen.

Der Polaritätsumschalter UM ist ein universeller Schaltkreis zur geschalteten Invertierung einer Eingangsspannung und kann in beliebigen Schaltungen verwendet werden. Er ist insbesondere dafür geeignet, in einem Netzabschluß die Polarität einer Stromversorgung schaltbar zu invertieren.

Der Netzabschluß NT des Telekommunikationsnetzes ISDN beinhaltet daher den Polaritätsumschalter UM zur wahlweisen Weiterleitung einer Stromversorgung für mindestens ein an den Netzabschluß NT anzuschließendes Endgerät END1, END2 oder zur Invertierung der Polarität der Stromversorgung und der anschließenden Weiterleitung der Stromversorgung mit der invertierten Polarität.

Der Netzabschluß NT beinhatet die Auswahleinrichtung AU und die Steuereinrichtung CTRL. Die Auswahleinrichtung AU ist geeignet, eine erste und eine zweite Stromversorgung gleicher Polarität zu empfangen, eine der zwei Stromversorgungen auszuwählen und zum Polaritätsumschalter UM zu übertragen sowie die Steuereinrichtung CTRL über die Auswahl zu informieren. Die Steuereinrichtung CTRL ist geeignet, den Polaritätsumschalter UM derart anzusteuern, daß eine Stromversorgung mit einer unveränderten Polarität weitergeleitet wird, wenn die erste Stromversorgung ausgewählt wurde und eine Stromversorgung mit einer invertierten Polarität weitergeleitet wird, wenn die zweite Stromversorgung ausgewählt wurde.

Die Auswahleinrichtung AU beinhaltet einen Detektor, um aus den beiden empfangenen Stromversorgungen diejenige mit der höheren Amplitude zu detektieren, diese auszuwählen und weiterzuleiten.

Der Netzabschluß NT beinhaltet den Umsetzer AC/DC, um die erste Stromversorgung aus einer dem Netzabschluß NT von extern zugeführten

Stromversorgung zu generieren. Die Stromversorgung hat eine Gleichspannung von +40 Volt. Diese Gleichspannung wird an die Auswahleinrichtung AU weitergeleitet.

Der Netzabschluß NT beinhaltet die Batterie BATT, um die zweite Stromversorgung zu generieren, die ebenfalls eine Gleichspannung von +40 Volt hat. Auch diese Gleichspannung wird an die Auswahleinrichtung AU weitergeleitet. In der Praxis wird die Gleichspannung der Batterie BATT so eingestellt, daß sie etwas unterhalb von +40 Volt liegt, z.B. bei +39,5 Volt. Die Gleichspannung des Umsetzers AC/DC wird so eingestellt, daß sie etwas oberhalb von +40 Volt liegt, z.B. bei +40,5 Volt. Durch diese Maßnahme wird erreicht, daß der Detektor in der Auswahleinrichtung AU stets die Gleichspannung des Umsetzers AC/DC auswählt. Nur für den Fall, daß die Gleichspannung des Umsetzers AC/DC unter 39,5 Volt liegt, wählt die Auswahleinrichtung AU die Gleichspannung der Batterie aus. In einem solchen Fall ist davon auszugehen, daß die Gleichspannung des Umsetzers AC/DC derart gestört ist, daß sie nicht mehr die nötige Stromversorgung für alle am Netzabschluß NT angeschlossenen Endgeräte bereitstellen kann. Der Detektor in der Auswahleinrichtung AU ist z.B. mittels eines Komparators realisierbar. Die Umschaltung zwischen der Gleichspannung des Umsetzers AC/DC und der Gleichspannung der Batterie BATT kann mittels eines Bipolartransistors erfolgen. Die Umschaltung ist unkritisch, da zwischen nahezu identischen Spannungswerten hin- und hergeschaltet wird.

Die Steuereinheit CTRL ist beipielsweise als Prozessor oder als reprogrammierbare Schaltung ausgeführt ist. Als Prozessor kann z.B. ein Mikroprozessor oder ein digitaler Signalprozessor verwendet werden. Als reprogrammierbare Schaltung kann z.B ein FPGA oder ein CPLD verwendet werden; FPGA = Field Programmable Gate Array, CPLD = Complex Programmable Logic Device. Die Steuereinheit CTRL benötigt nicht die gesamte Kapazität eines Prozessors oder einer reprogrammierbaren Schaltung. Im Netzabschluß NT ist in der Regel bereits ein Prozessor oder eine reprogrammierbare Schaltung vorhanden, um z.B. die Signale für den GCI Bus zu generieren; GCI = General Circuit Interface. Daher kann ein Teil eines bereits existierenden Prozessors oder einer reprogrammierbaren Schaltung für die Ansteuerung der beiden optisch ansteuerbaren Transistoren OT1, OT2 benutzt werden. Die Ansteuerung erfolgt folgendermaßen:

In die Steuereinrichtung CTRL wird eine Finite State Machine FSM z.B. durch SW-Programmierung implementiert, die mindestens drei Zustände hat: 1. der zweite optisch ansteuerbare Transistor OT2 leitet, der erste optisch ansteuerbare Transistor OT1 sperrt, 2. beide optisch ansteuerbaren Transistoren OT1, OT2 sperren und 3. der erste optisch ansteuerbare Transistor OT1 leitet, der zweite optisch ansteuerbare Transistor OT2 sperrt.

Im ersten Zustand leitet der optisch ansteuerbare Transistor OT2, was zur Folge hat, daß die Transistoren T2 und T3 leiten. Gleichzeitig sperrt der optisch ansteuerbare Transistor OT1, was zur Folge hat, daß die Transistoren T1 und T4 sperren. Dies hat zur Folge, daß am Ausgang des Polaritätsumschalters UM eine Spannung von +40 Volt anliegt.

Im zweiten Zustand sperren beide optisch ansteuerbaren Transistoren OT1, OT2, was zur Folge hat, daß alle Transistoren T1, T2, T3, T4 sperren. Dies hat zur Folge, daß am Ausgang des Polaritätsumschalters UM eine Spannung von 0 Volt anliegt.

Im dritten Zustand leitet der optisch ansteuerbare Transistor OT1, was zur Folge hat, daß die Transistoren T1 und T4 leiten. Gleichzeitig sperrt der optisch ansteuerbare Transistor OT2, was zur Folge hat, daß die Transistoren T2 und T3 sperren. Dies hat zur Folge, daß am Ausgang des Polaritätsumschalters UM eine Spannung von -40 Volt anliegt.

Die Steuereinrichtung CTRL steuert die optisch ansteuerbaren Transistoren OT1, OT2 zur Generierung der Stromversorgung mit der invertierten Polarität folglich derart an, daß nacheinander die Zustände 1, 2, 3 durchlaufen werden. Der Zustand 2 wird nur für kurze Zeit geschlaltet, z.B. einige Millisekunden. Er soll verhindern, daß während des Umschaltvorganges keine Kurzschlüsse auftreten, die zur Zerstörung der Transistoren T1, T2, T3 und T4 führen könnten.

Die Steuereinrichtung CTRL steuert die optisch ansteuerbaren Transistoren OT1, OT2 bei der Rückumschaltung auf die Stromversorgung mit der ursprünglichen Polarität derart an, daß nacheinander die Zustände 3, 2, 1 durchlaufen werden. Somit kann reversibel hin und her geschaltet werden.

In der Finite State Machine FSM kann z.B. ein vierter Zustand implementiert werden. Im vierten Zustand sperren beide optisch ansteuerbaren Transistoren OT1, OT2, was zur Folge hat, daß alle Transistoren T1, T2, T3, T4 sperren. Dies hat zur Folge, daß am Ausgang des Polaritätsumschalters UM eine Spannung von 0 Volt anliegt. Bei der Umschaltung von +40 Volt auf -40 Volt werden dann die Zustände 1, 2, 3 durchlaufen und bei der Umschaltung von -40 Volt auf +40 Volt die Zustände 3, 4, 1. Dadurch wird eine Trennung zwischen Hin- und Rückschaltung erreicht, wodurch eine unidirektionale Verbindung der einzelnen Zustände entsteht, die einfacher zu managen ist.

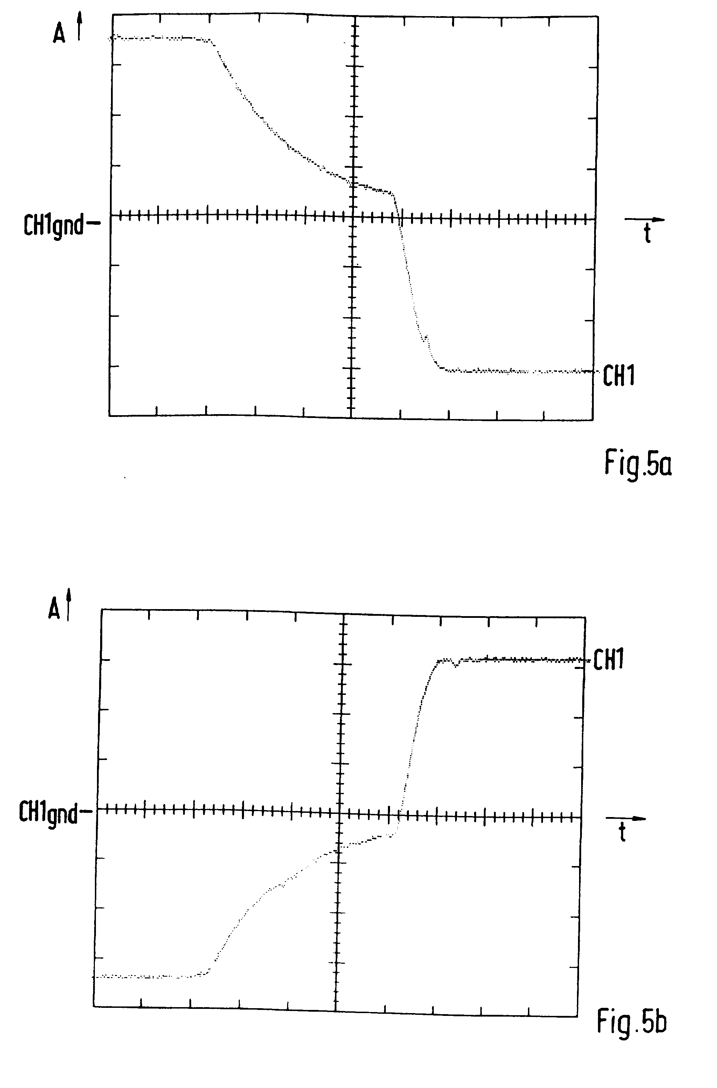

In Fig. 4 ist ein Zustandsgraph für die Finite State Machine gezeigt.

In Fig. 5 sind zwei Diagramme mit experimentellen Ergebnissen gezeigt, bei denen auf der Vertikalen die Amplitude A der Ausgangsspannung des Polaritätumschalters UM aufgetragen ist und auf der Horizontalen die Zeit t. In Fig. 5a ist eine Umschaltung von +40 Volt auf -40 Volt gezeigt, in Fig. 5b eine Umschaltung von -40 Volt auf +40 Volt.

Wie im Ausführungsbeipiel ausgeführt kann die Erfindung sowohl bei einem Telekommunikationsnetz, das als ISDN ausgeführt ist als auch bei einem Telekommunikationsnetz, das als Verteilnetz mit Rückkanal ausgeführt ist angewendet werden.

Beim ISDN werden üblicherweise die erste Stromversorgung aus einer über das Telekommunikationsnetz ISDN ferngespeisten Stromversorgung generiert und die zweite Stromversorgung aus einer unabhängig vom Telekommunikationsnetz ISDN dem Netzabschluß zugeführten Stromversorgungsleitung. Beim Verteilnetz mit Rückkanal können die erste Stromversorgung aus einer unabhängig vom Telekommunikationsnetz ISDN dem Netzabschluß zugeführten Stromversorgungsleitung und die zweite Stromversorgung aus einer Batterie generiert werden.

Im Ausführungsbeispiel generieren die Batterie aus Fig. 2 eine Gleichspannung von +40 Volt und der Umsetzer aus Fig. 2 ebenfalls eine Gleichspannung von +40Volt. Die Auswahleinrichtung aus Fig. 2 wählt dann eine Spannung aus und leitet diese an den Polaritätsumschalter aus Fig. 2 weiter. Anstelle dieser Anordnung kann auch eine weitere bevorzugte Anordnung verwendet werden, bei der die Batterie eine Gleichspannung von +12 Volt erzeugt, der Umsetzer eine Gleichspannung von +15 Volt, die Auswahleinrichtung aus diesen beiden Gleichspannungen eine auswählt und zu einem DC/DC-Umsetzer weiterleitet, der die ausgewählte Gleichspannung in eine Gleichspannung von +40 Volt umsetzt und diese Gleichspannung an den Polaritätsumschalter weiterleitet. Damit erhält der Polaritätsumschalter immer eine Gleichspannung von exakt +40 Volt. Die Auswahl der Batteriespannung erfolgt, sobald die vom Umsetzer gelieferte Gleichspannung unter 12 Volt absinkt. Die Auswahl kann somit auf einfache Art und Weise über einen Komparator erfolgen. Die Batteriespannung ist gegenüber dem Ausführungsbeipiel reduziert, was zur Folge hat, daß im Netzabschluß eine kostengünstigere Batterie geringeren Ausmaßes eingesetzt werden kann.

## Patentansprüche

1. Polaritätsumschalter (UM) zur wahlweisen Weiterleitung einer Spannung mit einer vorgegebenen Polarität oder zur Invertierung der Polarität der Spannung und zur Weiterleitung der Spannung mit invertierter Polarität, **dadurch gekennzeichnet,** daß der Polaritätsumschalter (UM) zwei optisch ansteuerbare Transistoren (OT1, OT2) zur Invertierung der Polarität der Spannung beinhaltet.

2. Polaritätsumschalter (UM) nach Anspruch 1, dadurch gekennzeichnet, daß die zwei optisch ansteuerbare Transistoren (OT1, OT2) als Optokoppler oder als Opto-MOS Transistoren ausgeführt sind.

3. Polaritätsumschalter (UM) nach Anspruch 1 oder 2, dadurch gekennzeichnet, daß der Polaritätsumschalter (UM) zwei optisch ansteuerbare Transistoren (OT1, OT2) und vier Transistor/Widerstandspaare (T1, R1 ; T2, R2; T3, R3; T4, R4) beinhaltet, wobei jedes Transistor/Widerstandspaar (T1, R1 ; T2, R2; T3, R3; T4, R4) einen Transistor (T1, T2, T3, T4) und einen mit dem Steuereingang und dem stromverstärkenden Ausgang des Transistors (T1, T2, T3, T4) verbundenen Widerstand (R1, R2, R3, R4) beinhaltet, daß jeweils zwei Transistor/Widerstandspaare (T1, R1, T2, R2; T3, R3, T4, R4) in Reihe geschaltet sind, und daß jeweils ein optisch ansteuerbarer Transisitor (OT1 ; OT2) zwei Transistor/Widerstandspaare (T1, R1, T4, R4; T2, R2, T3, R3) ansteuert, die nicht miteinander in Reihe verschaltet sind.

4. Netzabschluß (NT) eines Telekommunikationsnetzes (ISDN) beinhaltend einen Polaritätsumschalter (UM) nach Anspruch 1, 2 oder 3 zur wahlweisen Weiterleitung einer Stromversorgung für mindestens ein an den Netzabschluß (NT) anzuschließendes Endgerät (END1, END2) oder zur Invertierung der Polarität der Stromversorgung und der anschließenden Weiterleitung der Stromversorgung mit der invertierten Polarität.

5. Netzabschluß (NT) nach Anspruch 4, dadurch gekennzeichnet, daß der Netzabschluß (NT) eine Auswahleinrichtung (AU) und eine Steuereinrichtung (CTRL) beinhaltet, daß die Auswahleinrichtung (AU) geeignet ist, eine erste und eine zweite Stromversorgung gleicher Polarität zu empfangen, eine der zwei Stromversorgungen auszuwählen und zum Polaritätsumschalter (UM) zu übertragen sowie die Steuereinrichtung (CTRL) über die Auswahl zu informieren, und daß die Steuereinrichtung (CTRL) geeignet ist, den Polaritätsumschalter (UM) derart anzusteuern, daß eine Stromversorgung mit einer unveränderten Polarität weitergeleitet wird, wenn die erste Stromversorgung ausgewählt wurde und eine Stromversorgung mit einer invertierten Polarität weitergeleitet wird, wenn die zweite Stromversorgung ausgewählt wurde.

6. Netzabschluß (NT) nach Anspruch 5, dadurch gekennzeichnet, daß die Auswahleinrichtung (AU) einen Detektor beinhaltet, um aus den beiden empfangenen Stromversorgungen diejenige mit der höheren Amplitude zu detektieren, diese auszuwählen und weiterzuleiten.

7. Netzabschluß (NT) nach Anspruch 5 oder 6, dadurch gekennzeichnet, daß der Netzabschluß (NT) einen Umsetzer (AC/DC) beinhaltet, um die erste Stromversorgung aus einer dem Netzabschluß (NT) von extern zugeführten Stromversorgung zu generieren und an die Auswahleinrichtung (AU) weiterzuleiten.

8. Netzabschluß (NT) nach Anspruch 7, dadurch gekennzeichnet, daß der Netzabschluß (NT) eine Batterie (BATT) beinhaltet, um die zweite Stromversorgung zu generieren und an die Auswahleinrichtung (AU) weiterzuleiten.

9. Netzabschluß (NT) nach Anspruch 5, dadurch gekennzeichnet, daß die Steuereinheit (CTRL) als Prozessor oder als reprogrammierbare Schaltung ausgeführt ist.

10. Netzabschluß (NT) nach Anspruch 5 oder 9, dadurch gekennzeichnet, daß in die Steuereinrichtung (CTRL) eine Finite State Machine (FSM) implementiert ist, die mindestens drei Zustände hat: 1. der zweite optisch ansteuerbare Transistor (OT2) leitet, der erste optisch ansteuerbare Transistor (OT1) sperrt, 2. beide optisch ansteuerbaren Transistoren (OT1, OT2) sperren und 3. der erste optisch ansteuerbare Transistor (OT1) leitet, der zweite optisch ansteuerbare Transistor (OT2) sperrt, und daß die Steuereinrichtung (CTRL) die optisch ansteuerbaren Transistoren (OT1, OT2) zur Generierung der Stromversorgung mit der invertierten Polarität derart ansteuert, daß nacheinander die Zustände 1, 2, 3 durchlaufen werden.

11. Netzabschluß (NT) nach Anspruch 10, dadurch gekennzeichnet, daß die Steuereinrichtung (CTRL) die optisch ansteuerbaren Transistoren (OT1, OT2) bei der Rückumschaltung auf die Stromversorgung mit der ursprünglichen Polarität derart ansteuert, daß nacheinander die Zustände 3, 2, 1 durchlaufen werden.

12. Netzabschluß (NT) nach einem der Ansprüche 4 bis 11, dadurch gekennzeichnet, daß das Telekommunikationsnetz (ISDN) als ISDN oder als Verteilnetz mit Rückkanal ausgeführt ist.

13. Netzabschluß (NT) nach Anspruch 5 oder 6, dadurch gekennzeichnet, daß die erste Stromversorgung aus einer unabhängig vom Telekommunikationsnetz (ISDN) dem Netzabschluß zugeführten Stromversorgungsleitung generiert wird, und daß die zweite Stromversorgung aus einer über das Telekommunikationsnetz (ISDN) ferngespeisten Stromversorgung oder aus einer Batterie generiert wird.

14. Netzabschluß (NT) nach Anspruch 5, dadurch gekennzeichnet, daß die erste und die zweite Stromversorgung eine Speisespannung von +40 Volt haben und daß bei einer Invertierung im Polaritätsumschalter (UM) eine Stromversorgung mit einer Speisespannung von -40 Volt generiert wird.
